# EUROPEAN PATENT APPLICATION

(11) **EP 4 470 666 A1**
(43) Date of publication of application: **04.12.2024**
(21) Application number: 23883137.4
(22) Date of filing: 26.10.2023
(51) Int. Cl.: B01J 23/847, B01J 21/10, B01J 21/02, B01J 35/00, B01J 37/00, B01J 37/08, B01J 37/02, C01B 32/162

(54) **CATALYST FOR PRODUCING CARBON NANOTUBES, AND METHOD FOR PRODUCING CATALYST**

(30) Priority: 28.10.2022 KR 20220141852
(71) Applicant: LG Chem, Ltd., Yeongdeungpo-gu Seoul 07336 (KR)
(72) Inventor: KIM, Sung Jin, Daejeon 34122 (KR); KIM, Se Hyun, Daejeon 34122 (KR); OH, Eu Gene, Daejeon 34122 (KR); KIM, Og Sin, Daejeon 34122 (KR); GIM, Min Yeong, Daejeon 34122 (KR)
(74) Representative: Goddar, Heinz J.
(86) International application number: PCT/KR2023/016774
(87) International publication number: WO 2024/091032

(57) **Abstract**

The present invention relates to a catalyst for producing carbon nanotubes, and a method for preparing the catalyst. Carbon nanotubes produced with the catalyst of the present invention have a large specific surface area and a low powder resistance, and thus, are particularly suitable for use as a conductive material in secondary batteries.

## Description

### [TECHNICAL FIELD]

### Cross-reference to Related Application

This application claims the benefit of priority to Korean Patent Application No. 10-2022-0141852 filed on October 28, 2022, the disclosure of which is incorporated herein by reference in its entirety.

### Technical Field

The present invention relates to a catalyst capable of synthesizing carbon nanotubes having a large specific surface area and a low powder resistance, and a method for producing the same.

### [BACKGROUND ART]

Depending on the shape of the material, carbon nanomaterials include fullerene, carbon nanotube (CNT), graphene, and graphite nano plate. Among them, the carbon nanotube is a macromolecule in which a hexagonal honeycomb-shaped graphite surface, in which one carbon atom is bonded to three other carbon atoms, is rolled up into a nano-sized diameter.

The carbon nanotube is hollow and light, and has electrical conductivity as good as copper, thermal conductivity as good as diamond, and tensile strength as good as steel. Depending on the rolled form, it is also classified into single-walled carbon nanotube (SWCNT), multi-walled carbon nanotube (MWCNT), and rope carbon nanotube.

Recently, the area where the most active research is being conducted on the use of carbon nanotubes is in the field of lithium secondary batteries. The ultimate goal of the lithium secondary batteries is to store more electrical energy in a smaller size. As one of the methods for manufacturing an electrode having a higher energy density per unit volume by improving the electrode density of the lithium secondary battery, a method of applying the carbon nanotubes as a conductive material is being studied. In general, since high-density electrodes are formed by molding electrode active material particles having a size of several µm to several tens of µm by a high-pressure press, it is easy that the particles are deformed during the molding process, the space between the particles is reduced, and electrolyte permeability is reduced. To solve this problem, a material with excellent electrical conductivity and strength is used as a conductive material when manufacturing the electrodes. Carbon nanotubes are also widely used as the conductive material because they have excellent strength and electrical conductivity. When the conductive material is used in manufacturing the electrode, the conductive material is dispersed between the compressed electrode active materials to maintain micropores between the active material particles, thereby facilitating penetration of an electrolyte, and reducing resistance within the electrode due to excellent conductivity.

However, when using carbon nanotubes as a conductive material, the most problematic is the low solubility and dispersibility of the carbon nanotubes themselves. The carbon nanotubes have a problem in that they do not achieve a stable dispersion in an aqueous solution due to strong van der Waals attraction between them and agglomeration occurs. If the carbon nanotubes aggregate in the dispersion, the processability of the dispersion deteriorates and the dispersion cannot be applied uniformly. Therefore, it is preferable to apply the dispersion in a state in which the viscosity of the dispersion is minimized.

As a method for improving the poor dispersibility of the carbon nanotube dispersions, various methods are known. For example, there has been proposed a method of dispersing carbon nanotubes in a dispersion medium through mechanical dispersion treatment such as ultrasonic treatment. However, in the case of this method, the dispersibility is excellent while ultrasonic waves are being irradiated, but the carbon nanotubes begin to aggregate immediately after the ultrasonic irradiation is terminated, and even when the concentration of carbon nanotubes is higher than a certain level, there is also a problem that the carbon nanotubes quickly aggregate. In addition, methods for dispersing and stabilizing carbon nanotubes using various dispersants have been proposed, but these methods also have the problem that it is difficult to suppress an increase in viscosity that may occur when the carbon nanotubes are dispersed at a high concentration in a dispersion medium.

Therefore, it is necessary to manufacture a novel carbon nanotube in which the dispersibility can be further enhanced by improving the properties of the carbon nanotube itself, rather than by mechanical dispersion treatment such as ultrasonic treatment or auxiliary means such as the use of dispersants.

### Prior Art Literature

(Patent Document 1) KR 10-2017-0031061 A (published on March 20, 2017)

### [DISCLOSURE]

### [TECHNICAL PROBLEM]

An object of the present invention is to provide a novel catalyst for producing carbon nanotubes, wherein the catalyst is capable of preparing a carbon nanotube that is particularly suitable for use as a conductive material due to its large specific surface area and low powder resistance, as well as its low viscosity when preparing a dispersion and thus excellent processability, and a method for producing the catalyst.

### [TECHNICAL SOLUTION]

In order to solve the above problems, the present invention provides a catalyst for producing carbon nanotubes, and a method for producing the same.

Specifically, (1) the present invention provides a catalyst for producing carbon nanotubes, the catalyst comprising a cocatalyst component and a main catalyst component supported on a hydrotalcite, wherein the content of the main catalyst component is 10% by weight or less based on the total weight of the catalyst, and the molar ratio of the main catalyst component to the cocatalyst component is 1.0 to 10.

(2) The present invention provides the catalyst for producing carbon nanotubes according to (1) above, wherein the hydrotalcite has a volume average particle size of 10 to 200 µm.

(3) The present invention provides the catalyst for producing carbon nanotubes according to (1) or (2) above, wherein the main catalyst component is at least one selected from the group consisting of Ni, Co, and Fe.

(4) The present invention provides the catalyst for producing carbon nanotubes according to any one of (1) to (3) above, wherein the cocatalyst component is at least one selected from the group consisting of Mo and V.

(5) The present invention provides the catalyst for producing carbon nanotubes according to any one of (1) to (4) above, wherein the content of the main catalyst component is 5.0 to 6.5% by weight.

(6) The present invention provides the catalyst for producing carbon nanotubes according to any one of (1) to (5) above, wherein the molar ratio of the main catalyst component to the cocatalyst component is 2.5 to 5.0.

(7) The present invention provides a method of preparing a catalyst for producing carbon nanotubes, the method including the steps of: preparing a catalyst composition by adding a cocatalyst precursor, a main catalyst precursor, and an organic acid to a solvent (S1); and adding a hydrotalcite to the catalyst composition, and drying and calcining it to obtain a catalyst (S2), wherein the molar ratio of the main catalyst precursor to the cocatalyst precursor added in step (S1) is 1.0 to 10, and the calcination is performed at 150 to 450°C.

(8) The present invention provides the method of preparing a catalyst for producing carbon nanotubes according to (7) above, wherein the molar ratio of the organic acid to the cocatalyst precursor added in step (S1) is 0.30 to 0.50.

(9) The present invention provides the method of preparing a catalyst for producing carbon nanotubes according to (7) or (8) above, wherein the molar ratio of the main catalyst precursor to the organic acid added in step (S1) is 7.0 to 12.0.

(10) The present invention provides the method of preparing a catalyst for producing carbon nanotubes according to any one of (7) to (9) above, wherein the calcination is performed at 150 to 300°C.

### [ADVANTAGEOUS EFFECTS]

The carbon nanotubes synthesized using the catalyst of the present invention have a large specific surface area and a low powder resistance, and thus, when applied as a dispersion, can keep the viscosity of the dispersion itself low while maintaining the content of the carbon nanotubes at a certain level or more. Therefore, the carbon nanotubes are particularly suitable for use as a conductive material.

### [BEST MODES OF THE INVENTION]

Hereinafter, the present invention will be described in more detail.

The terms or words used in the specification and claims of the present application should not be construed as being limited to their ordinary or dictionary meanings, but should be interpreted as meanings and concepts consistent with the technical spirit of the present invention, based on the principle that the inventor may adequately define the concepts of terms to best describe his invention.

The term 'carbon nanotube' used in the present invention is a secondary structure formed by gathering units of carbon nanotubes to form a bundle entirely or partially, wherein the carbon nanotube unit has a graphite sheet in the shape of a cylinder with a nano-sized diameter, and has a sp2 bond structure. In this case, the characteristics of a conductor or semiconductor may appear depending on the angle and structure in which the graphite surface is rolled. Depending on the number of bonds forming the wall, the carbon nanotube unit may be divided into single-walled carbon nanotube (SWCNT), double-walled carbon nanotube (DWCNT), and multi-walled carbon nanotube (MWCNT), wherein the thinner the wall thickness, the lower the resistance.

The carbon nanotubes of the present invention may include one or more of single-walled, double-walled, and multi-walled carbon nanotube units.

### CATALYST FOR THE PRODUCTION OF CARBON NANOTUBES

The present invention relates to a catalyst capable of synthesizing carbon nanotubes with a wide specific surface area and low powder resistance by using a hydrotalcite having a hydroxyl group on the surface as a support, and optimizing the molar ratio between the supported co-catalyst component and the main catalyst component and the content of the main catalyst component based on the total weight of the catalyst. More specifically, the present invention provides a catalyst for producing carbon nanotubes, the catalyst comprising a cocatalyst component and a main catalyst component supported on a hydrotalcite, wherein the content of the main catalyst component is 10% by weight or less based on the total weight of the catalyst, and the molar ratio of the main catalyst component to the cocatalyst component is 1.0 to 10.

Hereinafter, each component of the catalyst for producing carbon nanotubes according to the present invention will be described separately.

### Hydrotalcite

The hydrotalcite serves as a support for the catalyst for producing carbon nanotubes of the present invention, and is characterized by having a structure that contains both magnesium and aluminum and has a hydroxyl group on the surface. The hydrotalcite has the technical advantage of being easy to impregnate metal precursors when applied to a supported catalyst due to the hydroxyl groups on the surface and also having excellent durability.

Meanwhile, the volume average particle size of the hydrotalcite may be 10 to 200 µm, preferably 20 to 100 µm. Additionally, the BET specific surface area of the hydrotalcite may be 1 to 100 m²/g, 5 to 50 m²/g, and preferably 12 to 40 m²/g.

When the volume average particle size and specific surface area of the hydrotalcite are within the above-mentioned ranges, cocatalyst and main catalyst components to be described later can be efficiently supported, and carbon nanotubes produced with the catalyst can have a large specific surface area.

The shape of the hydrotalcite is not particularly limited, but may be spherical or potato-shaped. Additionally, the hydrotalcite may have a porous structure, molecular sieve structure, honeycomb structure, etc. to have a relatively high surface area per unit mass or unit volume.

### Main catalyst component

In the catalyst for producing carbon nanotubes of the present invention, the main catalyst component may be one or more selected from the group consisting of Ni, Co, and Fe, and preferably Co. The main catalyst component serves to facilitate the carbon nanotube synthesis reaction by directly lowering the activation energy of the reaction in which the carbon nanotubes are synthesized from the carbon source gas. When the main catalyst component described above is used, it is desirable in that the activity of the manufactured catalyst can be high and durability can also be secured at a certain level or higher.

In the catalyst for producing carbon nanotubes of the present invention, the content of the main catalyst component may be 10% by weight or less, preferably 5.0 to 6.5% by weight. Even if the content of the main catalyst component is higher than the above-mentioned range, the substantial improvement in catalytic activity is insignificant, and if the content of the main catalyst component is too low, the activity of the catalyst itself may be greatly reduced. In particular, in the case of the prior art, it is disclosed that it is desirable to maximize catalytic activity by increasing the content of the main catalyst component beyond the above-mentioned range. However, as will be described later, when the main catalyst content is 10% by weight or less, and also the molar ratio of the main catalyst component to the cocatalyst component is 1.0 to 10, sufficient catalytic activity can be exhibited, and the specific surface area of the produced carbon nanotubes can be increased.

### Cocatalyst component

In the catalyst for producing carbon nanotubes of the present invention, the cocatalyst component may be one or more selected from the group consisting of Mo and V, and preferably V. The cocatalyst component plays a role in further increasing the catalytic activity of the main catalyst component. When the cocatalyst component described above is used, the synergy effect with the main catalyst component can be excellent, and agglomeration between the main catalyst components during the manufacturing process can be prevented.

In the catalyst for producing carbon nanotubes of the present invention, the molar ratio of the main catalyst component to the cocatalyst component may be 1.0 to 10, preferably 2.5 to 5.0. By setting the ratio between the main catalyst component and the cocatalyst component within the above-mentioned range, sufficient catalytic activity can be achieved with the synergistic effect between the main catalyst component and the cocatalyst component without having to increase the main catalyst content more than necessary.

### Method for producing catalyst for the production of carbon nanotube.

The present invention provides a method for producing the catalyst for producing carbon nanotubes described above. Specifically, the present invention provides a method of preparing a catalyst for producing carbon nanotubes, the method including the steps of: preparing a catalyst composition by adding a cocatalyst precursor, a main catalyst precursor, and an organic acid to a solvent (S1); and adding a hydrotalcite to the catalyst composition, and drying and calcining it to obtain a catalyst (S2), wherein the molar ratio of the main catalyst precursor to the cocatalyst precursor added in step (S1) is 1.0 to 10, and the calcination is performed at 150 to 450°C.

Hereinafter, each step of the above manufacturing method will be described separately.

### Step of preparing catalyst composition (S1)

The main catalyst precursor used in this step is a component for introducing the main catalyst component into the catalyst described above, and may be a compound containing the main catalyst component. More specifically, the main catalyst precursor may be a salt or oxide of Fe, Ni and Co, or a compound containing the metal components, and particularly preferably, may be Fe-, Ni- or Co-based precursors such as Fe(NO₃)₂·6H₂O, Fe(NO₃)₂·9H₂O, Fe(NO₃)₃, Fe(OAc)₂, Ni(NO₃)₂·6H₂O, Co(NO₃)₂·6H₂O, Co₂(CO)₈, [Co₂(CO)₆(t-BuC=CH)], Co(OAc)₂.

The cocatalyst precursor used in this step is a component for introducing the cocatalyst component into the catalyst described above, and may be a compound containing the cocatalyst component. The cocatalyst precursor may also be a salt or oxide of V and Mo, or a compound containing the metal components, and particularly preferably, may be a material such as NH₄VO₃, (NH₄)₆Mo₇O₂₄·4H₂O, Mo(CO)₆, or (NH₄)MoS₄. When the materials exemplified above are used as the precursor, there is an advantage in that the main catalyst component and the cocatalyst component are smoothly supported.

Meanwhile, like the molar ratio of the main catalyst component to the cocatalyst component in the catalyst, the molar ratio of the main catalyst precursor to the cocatalyst precursor in the catalyst composition may also be 1.0 to 10, and preferably 2.5 to 5.0.

The organic acid may be, for example, a multicarboxylic acid, which is a compound containing two or more carboxyl groups, and has high solubility as a complexing agent, inhibits precipitation, facilitates the synthesis of catalysts, and acts as an activator to increase the synthesis of carbon nanotubes. The multicarboxylic acid may be one or more selected from dicarboxylic acid, tricarboxylic acid, and tetracarboxylic acid. For example, carboxylic acid compounds such as citric acid, oxalic acid, malonic acid, succinic acid or tartaric acid, or anhydrides thereof may be used.

Depending on the amount of the organic acid added, the characteristics of the catalyst finally produced may vary. In the present invention, the added amount of the organic acid is determined so that the molar ratio of the organic acid to the cocatalyst precursor added in step (S1) is 0.30 to 0.50, and the molar ratio of the main catalyst precursor to the organic acid added in step (S1) is 7.0 to 12.0. Within the input amount range of the organic acid as described above, precipitation of metal components of the main catalyst and cocatalyst in the catalyst composition does not occur, and the occurrence of cracks during the subsequent calcination process can also be suppressed.

The solvent of the catalyst composition is not particularly limited as long as it can dissolve the main catalyst precursor and cocatalyst precursor described above, and for example, water is preferably used.

In the method for producing a catalyst for producing carbon nanotubes according to the present invention, it may further include a step of mixing the catalyst composition and aging it for a certain period of time before adding the hydrotalcite to the prepared catalyst composition. Specifically, the mixing may be performed by rotation or stirring at a temperature of 45°C to 80°C. The aging may be performed for 3 to 60 minutes.

### Drying and calcining step (S2)

The hydrotalcite as a support can be added to the catalyst composition prepared through the previous step so that the main catalyst and cocatalyst components are supported in the support. Afterwards, the main catalyst precursor and cocatalyst precursor may be converted into the main catalyst component and cocatalyst component through a drying and calcining process.

The drying in this step may be performed at 60°C to 200°C for 4 to 16 hours, and the drying method may be a conventional drying method applied in the art, such as oven drying, reduced pressure drying, and freeze drying.

The calcination in this step may be performed at a temperature of 150 to 450°C, preferably 150°C to 300°C. In the conventional method for producing the supported catalyst, the calcination is performed at a much higher temperature range compared to the calcination temperature range in the present invention, but in the present invention, the calcination is performed at such a low temperature range. When the calcination is performed in this temperature range, most of the main catalyst precursor and cocatalyst precursor can be converted into the main catalyst component and cocatalyst component while minimizing structural collapse of the hydrotalcite, which is a support.

Hereinafter, the present invention will be described in more detail by way of examples and experimental examples to specifically illustrate the present invention, but the present invention is not limited to these examples and experimental examples. However, the examples according to the present invention may be modified in various different forms, and the scope of the present invention should not be construed as being limited to the examples described in detail below. The examples of the present invention are provided to explain the present invention more completely to those skilled in the art.

### Examples and Comparative Examples

Co(NO₃)₂·6H₂O was used as a cobalt precursor, and NH₄VO₃ was used as a vanadium precursor. A catalyst composition was prepared by dissolving the cobalt precursor and vanadium precursor in water and dissolving citric anhydride (CA) with an organic acid. The catalyst composition was sufficiently stirred, and then added to hydrotalcite as a support. Afterwards, it was dried at 190°C for 5 hours using an oven, and then calcined for 4 hours at a specific calcination temperature and in the atmosphere to complete the catalyst. In the above process, the added amount of vanadium was 0.3 mole ratio relative to 1 mole of cobalt, and the amount of the citric acid anhydride was 0.13 mole ratio relative to 1 mole of cobalt. In the above process, various catalysts were prepared by varying the type of support, the cobalt content in the catalyst precursor composition, the ratio of cobalt to vanadium, the ratio of citric anhydride to vanadium, the calcination temperature, etc., and the catalyst preparation conditions in each Example and Comparative Example are summarized in Table 1 below.

**[Table 1]**

| | Support | Co content (%) | Co/V | CA/V | Co/CA | Calcination temperature (°C) |
|---|---|---|---|---|---|---|
| Example 1-1 | Hydrotalcite | 1.5 | 3.3 | 0.44 | 7.5 | 300 |
| Example 1-2 | Hydrotalcite | 2.5 | 3.3 | 0.44 | 7.5 | 300 |
| Example 1-3 | Hydrotalcite | 5.0 | 3.3 | 0.44 | 7.5 | 300 |
| Example 1-4 | Hydrotalcite | 5.5 | 3.3 | 0.44 | 7.5 | 300 |
| Example 1-5 | Hydrotalcite | 6.0 | 3.3 | 0.44 | 7.6 | 300 |
| Example 1-6 | Hydrotalcite | 6.5 | 3.3 | 0.44 | 7.5 | 300 |
| Example 1-7 | Hydrotalcite | 8.5 | 3.3 | 0.44 | 7.5 | 300 |
| Example 1-8 | Hydrotalcite | 10.0 | 3.3 | 0.44 | 7.5 | 300 |
| Comparative Example 1-1 | Hydrotalcite | 11.0 | 3.3 | 0.44 | 7.6 | 300 |
| Comparative Example 1-2 | Hydrotalcite | 14.0 | 3.3 | 0.44 | 7.6 | 300 |
| Example 2-1 | Hydrotalcite | 6.0 | 3.3 | 0.44 | 7.6 | 150 |
| Example 2-2 | Hydrotalcite | 6.0 | 3.3 | 0.44 | 7.6 | 250 |
| Example 2-3 | Hydrotalcite | 6.0 | 3.3 | 0.44 | 7.6 | 400 |
| Example 2-4 | Hydrotalcite | 6.0 | 3.3 | 0.44 | 7.6 | 450 |
| Example 3-1 | Hydrotalcite | 6.0 | 3.3 | 0.31 | 10.8 | 300 |
| Example 3-2 | Hydrotalcite | 6.0 | 3.3 | 0.43 | 7.6 | 300 |
| Example 4-1 | Hydrotalcite | 6.0 | 1.0 | 0.44 | 2.3 | 300 |
| Example 4-2 | Hydrotalcite | 6.0 | 1.7 | 0.44 | 3.8 | 300 |
| Example 4-3 | Hydrotalcite | 6.0 | 2.5 | 0.44 | 5.8 | 300 |
| Example 4-4 | Hydrotalcite | 6.0 | 2.9 | 0.44 | 6.5 | 300 |
| Example 4-4 | Hydrotalcite | 6.0 | 4.9 | 0.44 | 11.1 | 300 |
| Example 4-5 | Hydrotalcite | 6.0 | 10 | 0.44 | 22.7 | 300 |
| Comparative Example 4-1 | Al₂O₃ | 6.5 | 3.3 | 0.44 | 7.5 | 300 |
| Comparative Example 4-2 | MgO | 6.5 | 3.3 | 0.44 | 7.5 | 300 |
| Comparative Example 4-3 | Hydrotalcite | 6.0 | 0.8 | 0.44 | 1.8 | 300 |
| Comparative Example 4-4 | Hydrotalcite | 6.0 | 12.0 | 0.44 | 27.3 | 300 |

### Experimental Example 1. Confirmation of properties of carbon nanotubes produced with catalysts of Examples/Comparative Examples

Carbon nanotubes were synthesized using the catalysts prepared in the above examples. Specifically, after 0.3 g of the prepared catalyst was filled in the fixed bed reactor, nitrogen gas was injected into the fixed bed reactor at 1600 sccm, and the temperature inside the reactor was heated to 670°C. Then, ethylene gas as a carbon source gas was injected at 400 sccm, and the reaction was continued for 90 minutes to synthesize carbon nanotubes. The yield, purity, specific surface area, bulk density, and powder resistance of the synthesized carbon nanotubes were measured, and each property was measured using the method below.
1) Yield was calculated by measuring the weight of the carbon nanotubes obtained through the reaction and using the following formula.
   Yield = {(mass of recovered carbon nanotubes - mass of added catalyst)/(mass of added catalyst)}
2) Purity: (obtained amount of carbon nanotubes - added amount of catalyst) / obtained amount of carbon nanotubes * 100%
3) Specific surface area was calculated by determining the amount of nitrogen gas adsorbed under liquid nitrogen temperature (77K) using BELSORP-mini II of BEL Japan.
4) Bulk density was calculated by measuring the weight of carbon nanotubes contained in a container in free fall using a 25ml SUS measuring cup and dividing the measured weight by the volume of the container.
5) Powder resistance was measured by measuring the resistance according to pressure when the compressed density is 1 g/cc by using MCP-PD51 equipment of Nittoseiko Analytech.

The measured results are summarized in Table 2 below.

**[Table 2]**

| | Yield (fold) | Purity (%) | Specific surface area (m²/g) | Bulk density (kg/m³) | Powder resistance (S2 ·cm) |
|---|---|---|---|---|---|
| Example 1-1 | 1.5 | 60.0 | 480 | 30.0 | 0.0122 |
| Example 1-2 | 3.0 | 75.0 | 450 | 25.0 | 0.0115 |
| Example 1-3 | 4.94 | 83.17 | 417 | 22.4 | 0.0110 |
| Example 1-4 | 9.86 | 90.79 | 422 | 16.8 | 0.0095 |
| Example 1-5 | 14.6 | 93.6 | 415 | 17.2 | 0.0097 |
| Example 1-6 | 16.0 | 94.1 | 406 | 19.3 | 0.0100 |
| Example 1-7 | 26.0 | 96.3 | 325 | 24.0 | 0.0110 |
| Example 1-8 | 26.2 | 96.3 | 305 | 26.0 | 0.0115 |
| Comparative Example 1-1 | 25.8 | 96.3 | 287 | 28.4 | 0.0121 |
| Comparative Example 1-2 | 26.0 | 96.3 | 240 | 33.0 | 0.0135 |
| Example 2-1 | 13.0 | 92.9 | 450 | 17.0 | 0.0105 |
| Example 2-2 | 14.0 | 93.3 | 415 | 12.9 | 0.0090 |
| Example 2-3 | 16.0 | 94.1 | 350 | 21.2 | 0.0115 |
| Example 2-4 | 16.0 | 94.1 | 330 | 20.5 | 0.0115 |
| Example 3-1 | 9.1 | 90.1 | 391 | 23.3 | 0.0115 |
| Example 3-2 | 8.7 | 89.7 | 393 | 23.1 | 0.0116 |
| Example 4-1 | 10.7 | 91.5 | 321 | 26.7 | 0.0125 |
| Example 4-2 | 8.2 | 89.1 | 346 | 22.0 | 0.0123 |
| Example 4-3 | 19.6 | 95.1 | 389 | 20.9 | 0.0105 |
| Example 4-4 | 16.7 | 94.4 | 404 | 18.7 | 0.0100 |
| Example 4-4 | 12.0 | 92.3 | 367 | 16.2 | 0.0108 |
| Example 4-5 | 4.4 | 81.5 | 335 | 22.0 | 0.0122 |
| Comparative Example 4-1 | 2.2 | 67.7 | 260 | 15.0 | 0.0452 |
| Comparative Example 4-2 | 2.0 | 66.7 | 220 | 40.0 | 0.0550 |
| Comparative | 6.0 | 85.7 | 300 | 27.0 | 0.0140 |
| Example 4-3 | | | | | |
| Comparative Example 4-4 | 3.0 | 75.0 | 290 | 29.0 | 0.0158 |

As can be seen from Table 2 above, it can be confirmed that when the catalyst of the present invention is used, carbon nanotubes with a large specific surface area and low powder resistance are synthesized.

More specifically, Comparative Examples 1-1 and 1-2 used catalysts having a larger content of the main catalyst component compared to the examples of the present invention. However, as a larger amount of the main catalyst component was supported, the yield increased, which was substantially similar to that of each of Examples 1-7 with the main catalyst component content of 8.5% by weight or Example 1-8 with the main catalyst component content of 10% by weight, but the specific surface area and powder resistance were rather more inferior than those of Examples. From this, it can be confirmed that carbon nanotubes with a wider specific surface area and excellent electrical properties are manufactured even within the range of 10% by weight or less of the main catalyst component content, and increasing the main catalyst component content beyond that range is not desirable in terms of the properties of carbon nanotubes.

In addition, in the case of Examples 2-1 to 2- in which the temperature in the calcination step was varied, although the calcination was carried out at a temperature range significantly lower than the existing calcination temperature, rather, the produced carbon nanotubes had a large specific surface area, low powder resistance, and satisfactory results in terms of yield and purity.

In the case of Comparative Examples 4-1 and 4-2 using aluminum oxide or magnesium oxide rather than the hydrotalcite of the present invention as a support, the produced carbon nanotubes were shown to have a low specific surface area, a significantly high powder resistance, and significantly inferior results compared to the Examples in terms of yield and purity.

In addition, even in the case of Comparative Examples 4-3 and 4-4 in which the hydrotalcite was used as a support but the molar ratio between Co, the main catalyst component, and V, the cocatalyst component, was too low or high, carbon nanotubes with a lower specific surface area were produced compared to the case of using the catalysts of Examples 4-1 to 4-5 in which the same Co content is used but the molar ratio between Co and V is appropriate.

From the above results, it was confirmed that when the catalyst prepared using the catalyst preparation method of the present invention is used, carbon nanotubes with a large specific surface area and low powder resistance can be synthesized.

## Claims

1. A catalyst for producing carbon nanotubes, the catalyst comprising a cocatalyst component and a main catalyst component supported on a hydrotalcite,
wherein the content of the main catalyst component is 10% by weight or less based on the total weight of the catalyst, and
the molar ratio of the main catalyst component to the cocatalyst component is 1.0 to 10.

2. The catalyst for producing carbon nanotubes according to claim 1, wherein the hydrotalcite has a volume average particle size of 10 to 200 µm.

3. The catalyst for producing carbon nanotubes according to claim 1, wherein the main catalyst component is at least one selected from the group consisting of Ni, Co, and Fe.

4. The catalyst for producing carbon nanotubes according to claim 1, wherein the cocatalyst component is at least one selected from the group consisting of Mo and V.

5. The catalyst for producing carbon nanotubes according to claim 1, wherein the content of the main catalyst component is 5.0 to 6.5% by weight.

6. The catalyst for producing carbon nanotubes according to claim 1, wherein the molar ratio of the main catalyst component to the cocatalyst component is 2.5 to 5.0.

7. A method of preparing a catalyst for producing carbon nanotubes, the method including the steps of:
preparing a catalyst composition by adding a cocatalyst precursor, a main catalyst precursor, and an organic acid to a solvent (S1); and
adding a hydrotalcite to the catalyst composition, and drying and calcining it to obtain a catalyst (S2),
wherein the molar ratio of the main catalyst precursor to the cocatalyst precursor added in step (S1) is 1.0 to 10, and
the calcination is performed at 150 to 450°C.

8. The method of preparing a catalyst for producing carbon nanotubes according to claim 7, wherein the molar ratio of the organic acid to the cocatalyst precursor added in step (S1) is 0.30 to 0.50.

9. The method of preparing a catalyst for producing carbon nanotubes according to claim 7, wherein the molar ratio of the main catalyst precursor to the organic acid added in step (S1) is 7.0 to 12.0.

10. The method of preparing a catalyst for producing carbon nanotubes according to claim 7, wherein the calcination is performed at 150 to 300°C.
